# EUROPEAN PATENT SPECIFICATION

(11) **EP 3 997 515 B1**
(45) Date of publication and mention of the grant of the patent: **17.09.2025**
(21) Application number: 20754022.0
(22) Date of filing: 13.07.2020
(51) Int. Cl.: G03B 17/56

(54) **VENTED ELECTRONIC APPARATUS ATTACHABLE TO A POLE**
ENTLÜFTETES ELEKTRONISCHES GERÄT, DAS AN EINEM POLE BEFESTIGBAR IST
APPAREIL ÉLECTRONIQUE VENTILÉ ATTACHABLE À UN PÔLE

(30) Priority: 12.07.2019 IT 201900011670
(43) Date of publication of application: 18.05.2022
(73) Proprietor: Areti S.p.A., 00154 Rome (IT)
(72) Inventor: SVALUTO MOREOLO, Delio, 00154 Rome (IT); GALLI, Alberto, 00154 Rome (IT)
(74) Representative: IP Sextant s.r.l.
(86) International application number: PCT/IB2020/056550
(87) International publication number: WO 2021/009653

(56) References cited:
- WO-A1-00/04720
- CN-U- 202 488 555
- US-A- 3 732 368
- US-A- 4 414 576
- US-A- 4 920 367
- US-B1- 7 699 691

## Description

The present invention relates to a vented electronic apparatus configured to be operationally connected to a lighting pole. In particular, the present invention relates to a vented electronic apparatus comprising a system for dissipating the heat generated by the electronic components present inside the apparatus, such as for example a video camera or a lighting device and by any electronic circuits responsible for their control/supply.

Nowadays, in urbanized contexts or along areas subject to vehicular traffic, it is known to use lighting poles as supports to which one or more electronic components can be applied to perform specific functions.

These electronic devices, for example, can be configured for video surveillance or to provide supplementary lighting to that offered by the pole on which they are installed.

The use of lighting poles as a support for electronic components is motivated by the fact that the lighting poles are connected to an electrical power supply network and, therefore, can be used to power, in turn, the electronic components connected to the pole, without requiring the construction of an additional energy distribution network.

Furthermore, the widespread diffusion of lighting poles within an urbanized context offers a large number of supports to which connect the electronic components.

The electronic components can be housed inside a containment body, so as to be protected against atmospheric agents or vandalism. The containment body, in turn, is connected to the lighting pole by means of a cantilevered support structure, such as an arm or a bracket or the like. Such a prior art electronic component is described by US 2015/0212393 A1.

US 3,732,368 A describes a device comprising two hemispheres with electronic components located in each of them.

A problem affecting these traditional solutions concerns the ability to dispose of the heat generated within the electronic apparatus, to ensure proper functioning of the same.

Reaching high temperatures in the electronic equipment can be harmful to the electronics installed inside.

To solve internal overheating, the use of forced ventilation devices, such as one or more motorized fans, installed in the electronic apparatus is known.

However, this solution is not free from drawbacks with particular reference to the possibility that the forced ventilation members may be subject to failure or breakage, thus interrupting their cooling action. Such a malfunction can cause the entire electronic equipment to malfunction, making it necessary to maintain it, which is difficult to perform as it has to be carried out at height. Moreover, it is evident that these forced ventilation organs themselves contribute to increasing the internal heat due to their own self-consumption.

With reference to what has been described above, the purpose of the present invention is to allow in a simple, reliable, efficient and economical way to provide a ventilated electronic apparatus configured to be connected to a pole, capable of ensuring optimal dissipation of the heat generated by the electronic apparatus itself.

Another object of the present invention is to provide an electronic apparatus that is easy to install and maintain.

The specific object of the present invention is a vented electronic apparatus according to appended independent claim 1.

According to another aspect of the invention, the first half-container can comprise a first bottom shell and a first top shell and the second half-container can comprise a second bottom shell and a second top shell, wherein the system ventilation system may include:
- at least a first ventilation opening provided in the first bottom shell, through which the first bottom shell and the first top shell are in mutual fluid communication,
- a second ventilation opening provided in the first top shell, through which the first top shell is in fluid communication with the environment outside said box-like body,
- at least a first ventilation opening made in the second bottom shell, through which the second bottom shell and the second top shell are in mutual fluid communication, and
- a second ventilation opening made in the second top shell, through which said second top shell is in fluid communication with the environment outside the box-like body.
- According to a further aspect of the invention, the at least one first ventilation opening, provided in the first bottom shell and in the second bottom shell, and the second ventilation opening, provided in the first top shell and in the second top shell, can be positioned spaced apart along the longitudinal axis, so that they can be configured to promote a spontaneous movement of air according to a phenomenon of natural convection along the first half-container and along the second half-container.

According to an additional aspect of the invention, the first half-container and the second half-container, when mutually connected by means of the first connecting members, can define each other at least one bottom slot in fluid communication with the at least one first opening aeration made in the first bottom shell and with the at least one first ventilation opening made in the second bottom shell.

According to another aspect of the invention, the first bottom shell can comprise at least a first compartment for housing the at least one electronic component, wherein the at least one first compartment is delimited between side walls and a bottom wall, the bottom wall comprising the at least one first ventilation opening.

According to a further aspect of the invention, the second bottom shell can comprise at least a second compartment for housing the at least one electronic component, wherein the at least one second compartment is delimited between side walls and a bottom wall, the bottom wall comprising the at least one first ventilation opening.

According to an additional aspect of the invention, the first top shell can comprise an internal portion, facing the pole, delimited by a first internal wall, a second internal wall and a curved internal wall centrally interposed between the first flat internal wall and the second inner wall, wherein the at least one second ventilation opening is formed along a curved inner wall.

According to another aspect of the invention, the second top shell can comprise an internal portion, facing the pole, delimited by a first internal wall, a second internal wall and a curved internal wall centrally interposed between the first flat internal wall and the second inner wall, wherein the at least one second ventilation opening is formed along a curved inner wall.

According to a further aspect of the invention, the first bottom shell and the first top shell can be connected to each other, in a removable way, by means of second connecting members and wherein the second bottom shell and the second top shell are mutually connected, in a removable way, through third connecting members.

According to an additional aspect of the invention, the first half-container can comprise a first intermediate shell interposed, with shape coupling, between the first bottom shell and the first top shell and wherein the second half-container comprises a second intermediate shell interposed, with shape coupling, between the second bottom shell and the second top shell.

According to another aspect of the invention, the first intermediate shell can be hollow and place the first bottom shell in fluid communication with the first top shell and wherein the second intermediate shell can be hollow and place in fluid communication the second bottom shell and second top shell.

According to a further aspect of the invention, the second connecting members can comprise tie-rods passing through the first intermediate shell to mutually connect the first bottom shell and the first top shell by tightening them against the first intermediate shell, from opposite sides, and third connecting members comprise tie-rods passing through the second intermediate shell to mutually connect the second bottom shell and the second top shell by clamping them against the second intermediate shell, from opposite sides.

According to an additional aspect of the invention, the electronic apparatus can comprise at least one anti-condensation grid at the at least one first ventilation opening made in the first bottom shell and in the second bottom shell and/or the second ventilation opening made in the first top shell and in the second top shell.

According to another aspect of the invention, the first top shell may comprise a gutter element which extends at least partially at the perimeter of the at least one second ventilation opening and/or wherein the second top shell may comprise a further gutter element which extends at least partially at the perimeter of the at least one second ventilation opening.

According to a further aspect of the invention, the gutter element can develop from a top portion of the at least one second ventilation opening and continues along the lateral sides of the at least one second ventilation opening and/or wherein the further gutter element can develop starting from a top portion of the at least one second ventilation opening and continues along the lateral sides of the at least one second ventilation opening.

The advantages offered by the electronic apparatus according to the invention are evident.

In particular, the electronic apparatus according to the invention is housed inside a modular box-like body that is easy to install around a pole, to facilitate the installation around the pole itself of at least one electronic component capable of performing specific functions (such as video surveillance, lighting supplementary to that of the pole and acquisition of environmental data).

It should be noted that the term "modular" means that the box-like body, and consequently the entire electronic apparatus, can assume different configurations, guaranteeing a high flexibility of use with reference to the possibility of modifying the overall dimensions of the electronic apparatus according to the number and type of electronic components to be installed on board of the same.

Furthermore, the electronic apparatus according to the present invention comprises an aeration system configured to optimally dispose of the heat generated inside it by the electronic components, thus avoiding overheating problems.

The present invention will now be described, by way of illustration and not by way of limitation, according to its preferred embodiments, by particular referring to the Figures of the annexed drawings, wherein:
Figure 1 shows a perspective view from above of an electronic apparatus according to the invention;
Figure 2 shows a cross-sectional view of the electronic apparatus of Figure 1;
Figure 3 shows a perspective view from below of a part of the electronic apparatus of Figure 1;
Figure 4 shows a perspective view from below of a component of the electronic apparatus according to the invention;
Figure 5 shows a perspective view from above of the component of Figure 4;
Figure 6 shows a partially exploded view of the electronic apparatus of Figure 1;
Figure 7 shows a perspective view from below of a component of the electronic apparatus according to the invention;
Figure 8 shows a perspective view from above of a further version of the electronic apparatus according to the invention;
Figure 9 shows an exploded perspective view of the electronic apparatus of Figure 8.

In the Figures identical reference numbers will be used for similar elements.

With reference to the attached Figures, an electronic apparatus configured to be connected to a lighting pole is indicated as a whole with 1.

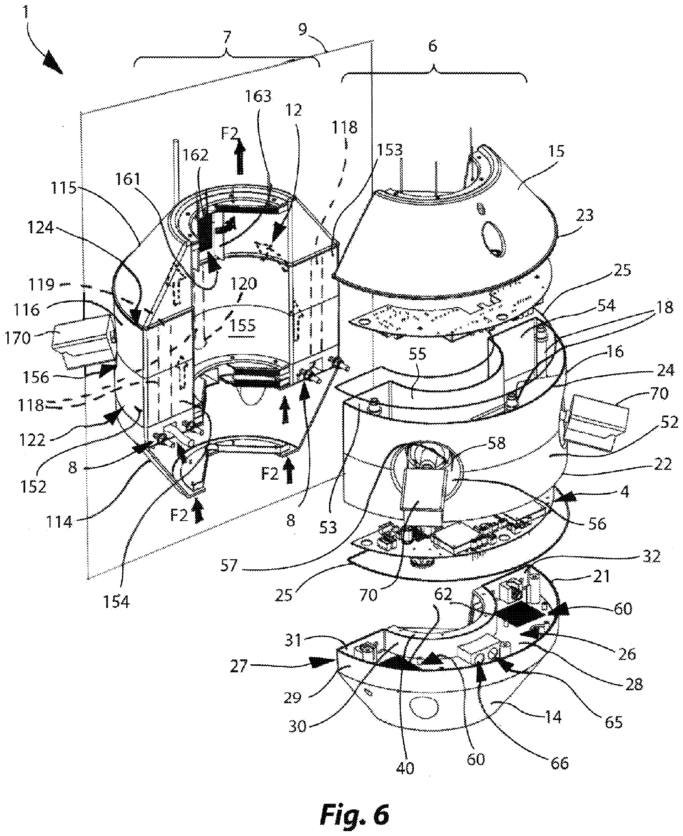

The electronic apparatus 1 is of the ventilated type and comprises a hollow box-like body 2, configured to be associated with a lighting pole 3, and at least one or more electronic components 4 housed inside the box-like body 2 (see the partially exploded view of Figure 6).

Preferably, the pole 3 is a lighting pole of the electrically powered type, to which the electronic apparatus 1 can be operationally connected, both from a mechanical point of view, being able to be connected to the pole 3 itself, and from an electrical point of view, being able to be powered by the network that feeds pole 3.

It is understood that, optionally, secondary power supply devices, not shown in the attached Figures, can be included in the electronic apparatus 1. The secondary power supply devices are configured to power the latter in the event of the absence of a mains power supply. For example, the secondary power supply devices may include batteries or the like operably connectable to the power supply network of the pole 3 and to the electronic apparatus 1 according to methods known in the field.

The term "electronic component" is intended to indicate, in a generic way, any electronic component used to acquire data such as a sensor for detecting temperature, air quality, for measuring sound, or a device for the acquisition of images, or an electronic device for transmitting radio frequency signals or more generally in wireless mode, a device for the emission of light or sounds, etc., as well as any electronic circuits used to power/control at least one other electronic component installed in the electronic apparatus 1.

The box-like body 2 has a modular structure which develops axially along a longitudinal axis 5 and which comprises a plurality of shells which can be connected together in a longitudinal direction, i.e. along a plane belonging to the bundle of planes passing through the longitudinal axis 5 (in other words it is the bundle of planes passing through the longitudinal axis 5) and/or in a transverse direction, i.e. along respective planes orthogonal to the longitudinal axis 5 (in other words, it is the improper orthogonal bundle of planes to the longitudinal axis 5).

In the following description, the term "longitudinal" is intended to indicate a direction or a plane parallel to the longitudinal axis 5 (parallel to the longitudinal axis along which the pole 3 extends to which the box-like body 2 is configured to be coupled), while the term "transversal", on the other hand, is intended to indicate a direction, an axis or a plane orthogonal to the longitudinal axis 5.

The box-like body 2 comprises a first half-container 6 and a second half-container 7 which can be mutually connected, in a removable way, by means of first connecting members 8. In fact, the first half-container 6 and the second half-container 7 are separated reciprocally with respect to a separation plane 9 (illustrated in Figure 6) which extends in the longitudinal direction, that is to say that it belongs to the bundle of planes passing through the longitudinal axis 5.

The first half-container 6 and the second half-container 7 are configured substantially identical to each other, optionally specular with respect to the separation plane 9 (see Figure 6). In this regard, it is noted that it is possible to produce the first half-container 6 and the second half-container 7 by means of the same mold, to reduce production costs.

The first half-container 6 and the second half-container 7 are hollow inside and each delimit at least one compartment for housing at least one respective electronic component 4, protecting it from the external environment.

The first half-container 6 and the second half-container 7, when they are mutually coupled to compose the box-like body 2, define between them a central cylindrical seat 10, configured to house a portion of the pole 3, which extends axially through the entire box-like body 2, along the longitudinal axis 5.

In particular, the first half-container 6 has an internal portion that defines a first seat 11, with a semicircular plan and, similarly, the second half-container 7 has a second seat 12, with a semicircular plan which, when the first half-container 6 and the second half-container 7 are placed side by side to define the central cylindrical seat 10.

The electronic apparatus 1 comprises abutment members, indicated as a whole with 13, operatively connected to the first half-container 6 and to the second half-container 7 and configured to extend inside the central seat 10 and abut against the pole 3, to be opposite sides, to firmly secure the electronic device 1 itself to the pole 3.

Preferably, the box-like body 2 has a barrel shape or, more generally, with a cylindrical or substantially cylindrical development around the longitudinal axis 5.

The term "barrel" is intended to indicate that the box-like body 2 is shaped as an elongated cylindrical element bearing a bottom end and a tapered top end, for example a truncated cone.

However, it should be noted that the box-like body 2 can have a different conformation with respect to the barrel one, even in the context of a solution with a cylindrical symmetry with respect to the longitudinal axis 5, for example elongated, spherical, cylindrical, ellipsoid or with a different symmetry, for example cubic, parallelepiped, optionally with rounded bottom and top ends, etc., falling within the same inventive concept of a solution that can be easily installed around the pole 3.

The box-shaped body 2, thus configured, provides at least two housing compartments wherein to position at least one electronic component 4 and is easily integrated, from an aesthetic as well as a technical point of view, around the pole 3.

The aesthetic integration is relevant in the case wherein the electronic apparatus 1 is installed around lighting poles that have a particularly worked and/or decorated or artistic conformation.

According to a preferred embodiment, at least the top end of the box-shaped body 2 is shaped to promote the flow of rainwater to avoid stagnation or the accumulation of dirt on the top of the electronic apparatus 1. In other words, the top end of the box-like body 2 is devoid of flat surfaces orthogonal to the longitudinal development of the box-like body 2 itself or, in any case, has limited portions of horizontal development to reduce as much as possible the presence of surfaces capable of promoting stagnation/deposit phenomena on the top of the box body 2.

The box-like body 2 is made of plastic material or in any case of other non-metallic material.

The box-like body 2 can be easily painted to adapt the external color of the electronic apparatus 1 to that of the installation pole 3, so as to make the electronic apparatus 1 appear as an integral part of the pole 3.

By way of non-limiting example, the first half-container 6 and the second half-container 7 can each have a "C" (semi-circular crown) or substantially "C" shaped plan area and each include a plurality of shells connected to each other to facilitate access to the electronic components 4 inside the electronic apparatus 1 as well as to facilitate the installation of the electronic apparatus 1 itself to the pole 3, as will be better described hereinafter.

The conformation of the first half-container 6 will be described below, given that similar considerations apply to the second half-container 7 which, as mentioned, has a similar structure.

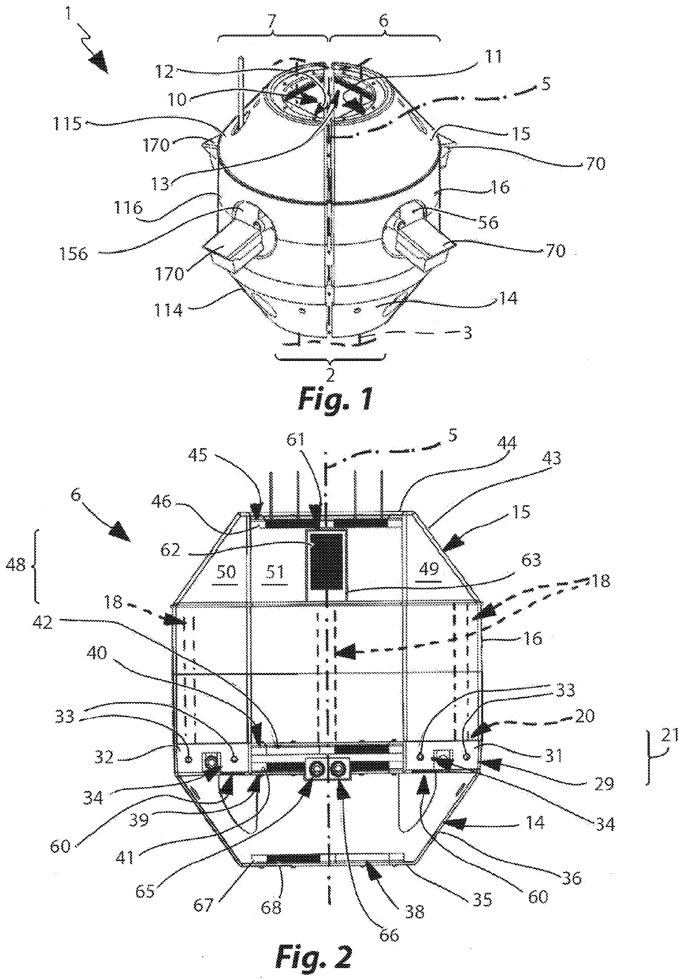

According to an embodiment of the electronic apparatus 1 illustrated in the attached Figures 1 to 3 and 6, the first half-container 6 comprises a first bottom shell 14, a first top shell 15 between which at least one first is optionally interposed intermediate shell 16.

The electronic apparatus 1 comprises second connection members to mutually connect the first bottom shell 14, the first top shell 15 and the first intermediate shell 16, tightening them together (see the exploded diagram of Figure 6).

The first bottom shell 14, the first top shell 15 and the first intermediate shell 16 are hollow to allow the housing of at least one electronic component 4 inside the first half-container 6.

The second connecting members are configured to perform a connection along a longitudinal direction, i.e. parallel to the longitudinal axis 5.

According to a preferred embodiment, the second connecting members comprise tie-rods 18 which connect in a removable way the first bottom shell 14 and the first top shell 15.

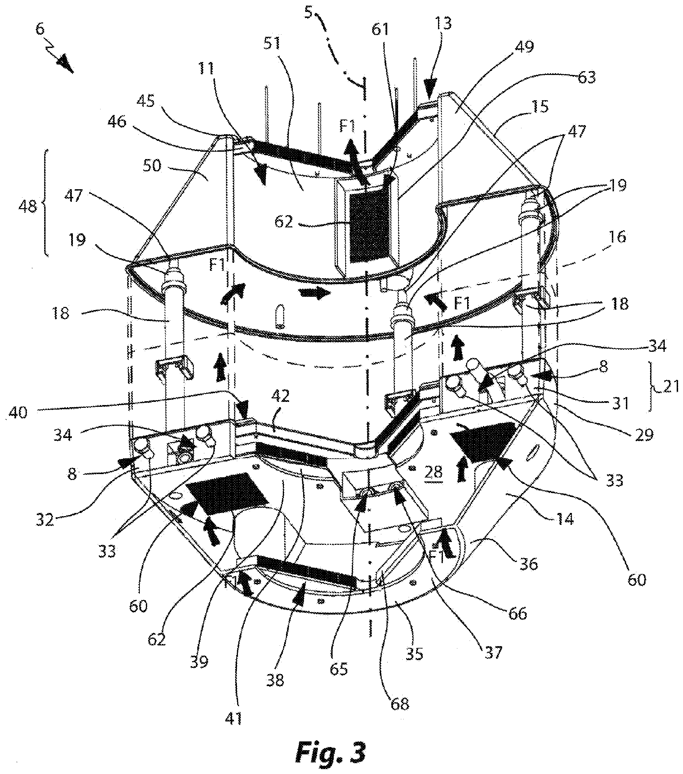

If the first half-container 6 comprises at least one first intermediate shell 16, it can be seen that the tie-rods 18 of the second connecting members 15 extend through the at least one first intermediate shell 16, connecting the first bottom shell 14, the first top shell 15 and the at least one first intermediate shell 16 reciprocally (see Figures 3 and 6).

In this regard, it can be observed that the second connecting members have a head end 19 connectable to the first top shell 15 and a bottom end 20 connectable to the first bottom shell 14 (see Figures 2 and 3).

The first bottom shell 14 has a top portion 21 complementary to a bottom portion 22 of the first intermediate shell 16 and, similarly, the first top shell 15 has a bottom portion 23 complementary to a top portion 24 of the first shell intermediate 16 (see Figure 6).

Therefore, the first bottom shell 14 and the at least one first intermediate shell 16, as well as the first top shell 15 and the at least one first intermediate shell 16, are mutually connectable through a shape coupling, promoting the assembly of the first half container 6.

However, it should be noted that the bottom portion 23 of the first top shell 15 is complementary to the top portion 21 of the first bottom shell 14.

The electronic apparatus 1 can comprise at least one perimeter gasket 25 at the connecting portions between the first bottom shell 14 and the at least one first intermediate shell 16, as well as between the first top shell 15 and the at least a first intermediate shell 16, to ensure a hermetic seal between them.

The first half-container 6 can comprise at least one compartment inside it for housing at least one electronic component 4.

For example, with reference to what is illustrated in the attached Figure 6, the first half-container 6 can comprise at least a first compartment 26 inside the first bottom shell 14, at the top portion 21 of the first bottom shell 14 itself .

The at least one first compartment 26 is delimited by side walls 27, the top of which perimeter defines the top portion 21 of the first bottom shell 14 and by a bottom wall 28 which extends transversely along the first bottom shell 14, that is to say that the bottom wall 28 develops orthogonal with respect to the longitudinal axis 5.

According to a preferred embodiment, the at least one first compartment 26 has a "C" (semi-circular crown) or substantially "C" shaped plan development, although it is understood that further conformations are possible depending on the configuration of the first half-container 6.

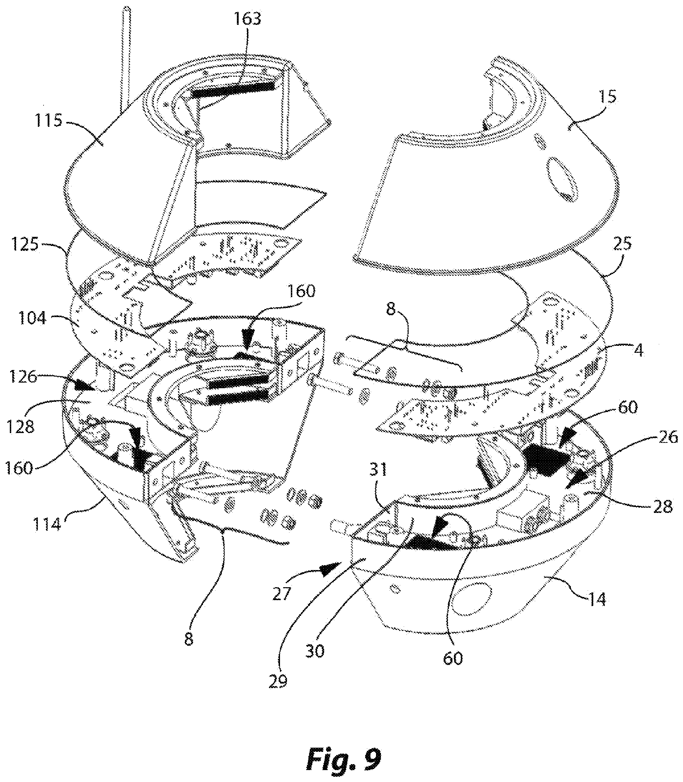

In particular, the at least one first compartment 26 has a curved external wall 29, a curved internal wall 30 (see Figures 6 and 9) connected to each other through a first internal flat wall 31 and a second internal flat wall 32.

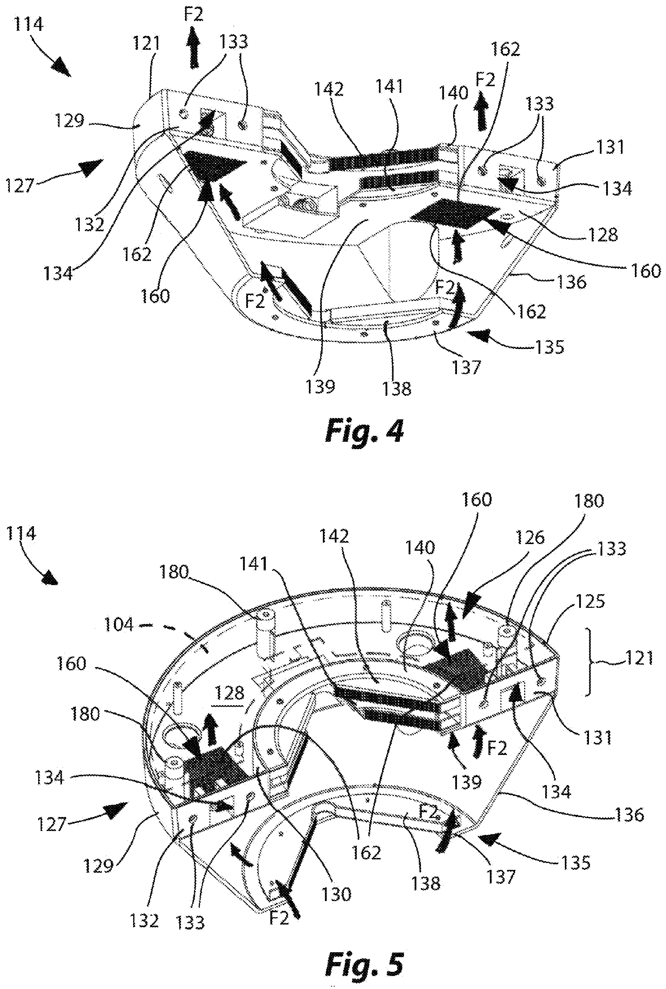

In particular, the curved internal wall 30 is interposed, in a central position, between the first internal wall 31 and the second internal wall 32 (see for example Figure 5).

The curved outer wall 29 and the curved inner wall 30 are each shaped in plan as a semi-circumference and are concentric with each other, with their respective concavities facing the interior of the first bottom shell 14 or, in other words, the concavities are directed towards the longitudinal axis 5 (on which lies the centre of said semicircumference of the plant of each of the curved outer and internal walls 29 and 30). The curved inner wall 30 has a smaller radius than the curved outer wall 29.

The first inner wall 31 and the second inner wall 32 are aligned with each other along the diameter shared by the curved outer wall 29 and the curved internal wall 30.

The first internal wall 31 and the second internal wall 32 each have at least one through opening 33 which can be engaged by the first connection members 8 to allow the connection between the first half-container 6 and the second half-container 7 (see Figures 2 and 3).

Furthermore, the first internal wall 31 and the second internal wall 32 act as abutments for respective portions of the second half-container 7, as better described below.

It is observed that the first internal wall 31 and/or the second internal wall 32 can comprise at least one further through opening 34 (see Figures 2 and 3) for the passage of any electrical conductors for the operational connection between electronic components 4 present in the first half-container 6 and further electronic components 104 present inside the second half-container 7 (see the detail views of Figures 5 and 6 wherein electronic components 4, 104 are shown on board electronic circuits shaped like a "C "or substantially to" C ").

This solution allows the passage of any conductors between the first half-container 6 and the second half-container 7 according to a solution capable of protecting the conductors themselves from atmospheric agents, as well as simplifying the installation of the electronic apparatus 1 or its any maintenance.

With reference to the embodiment illustrated in the Figures, the first bottom shell 14 and the first top shell 15 are each shaped like the half of a truncated cone.

This conformation promotes the aesthetic integration of the electronic device 1 around the pole 3, facilitates the flow of rainwater avoiding the formation of stagnation or the accumulation of dirt at the top of the electronic apparatus 1.

The first bottom shell 14 has a bottom portion 35, a central portion 36 and, as mentioned, a top portion 21 (see Figures 2 and 3).

The bottom portion 35 can comprise a first semi-circular flange 37, arranged in a central position, to allow the connection to the first bottom shell 14 of a first abutment element 38 configured to abut against the pole 3 and make the first adhere firmly half-container 6 to the same.

The first flange 37 defines a bottom portion of the first semicircular seat 11.

The first abutment element 38 has a first connection portion 67, configured to be operatively connected to the first flange 37, and at least an opposite abutment portion 68, comprising gripping elements adapted to abut firmly against the pole 3 (see Figure 3).

The gripping elements may comprise knurls or teeth configured to increase the grip of the first abutment element 38 against the surface of the pole 3 and thus ensure a firm connection.

The central portion 36 externally delimits the first bottom shell 14.

With reference to the embodiment illustrated in the attached Figures, the central portion 36 is inclined converging from the top portion 21 towards the bottom portion 35 of the first bottom shell 14.

As regards, instead, the conformation of the top portion 21 of the first bottom shell 14, reference should be made to what has been previously described.

It is observed that the first bottom shell 14 can comprise a second flange 39 and a third flange 40 which depart from the top portion 21 for the connection, respectively, of a second abutment element 41 and a third abutment element 42 to the first bottom shell 14.

In particular, the second flange 39 and the third flange 40 can protrude from the curved inner wall 30 of the first bottom shell 14, mutually spaced apart in a longitudinal direction, that is, along a direction parallel to the longitudinal axis 5.

The second abutment element 41 and the third abutment element 42 have the same conformation or a conformation equivalent to that of the first abutment element 38, being provided to fulfil the same purpose.

In fact, the second abutment element 41 and the third abutment element 42 allow a stable and safe clamping of the top portion 21 of the first bottom shell 14 against the post 3.

Preferably, the first bottom shell 14 is open along the portion which in use faces the pole 3, and which is comprised between the at least one first compartment 26, the bottom wall 28 and the bottom portion 35 of the first bottom shell 14.

In practice, the first bottom shell 14 has a cavity delimited between the at least one first compartment 26, the side portion 36 and the bottom portion 35.

The first top shell 15 has a configuration similar to that described for the first bottom shell 14.

The first top shell 15 has a bottom portion 23, a central portion 43 and a top portion 44.

The top portion 44 of the first top shell 15 can comprise a fourth semi-circular flange 45 for connecting a fourth abutment element 46 to the first top shell 15 (see Figure 2).

The fourth flange 45 is positioned centrally at the top portion 44 and, in fact, delimits the top of the first semicircular seat 11.

The central portion 43 externally delimits the first top shell 15.

According to a preferred embodiment, the central portion 43 is inclined divergent starting from the top portion 44 of the first top shell 15 towards the bottom portion 23 of the first top shell 15.

It is understood that the first top shell 15 can be configured differently, for example as a semi-cylinder and, in this case, it includes a central portion 43 shaped parallel to the longitudinal axis 5.

With reference to what is illustrated in the attached Figure 3, the top portion 44 of the first top shell 15 may have connection seats 47, which protrude internally from the first top shell 15 and are configured to be engaged by the second connection members. In particular, the connection seats 47 can be engaged by threaded elements which protrude from respective head ends 19 of the tie-rods 18, to connect the latter to the first top shell 15.

The first top shell 15 defines an upper covering element of the first half-container 6 and has a closed internal portion 48, which in use faces the pole 3 (see Figures 2 and 3), delimited by a first inner wall 49 flat, a second flat inner wall 50 and a curved inner wall 51 centrally interposed between them. The curved inner wall 51, in fact, delimits the top of the first semi-circular seat 11.

The first flat inner wall 49 and the second flat inner wall 50 are mutually aligned along a plane parallel to the separation plane 9.

The first intermediate shell 16, if present, acts as a spacer element between the first bottom shell 14 and the first top shell 15 as well as providing a further housing for the positioning of further electronic components 4 in the first half-container 6 of the apparatus electronic 1.

The at least one first intermediate shell 16 can have a "C" (semi-circular crown) or substantially "C" shaped plan dimensions.

More precisely, the at least one first intermediate shell 16 is delimited between a curved outer wall 52, a first flat inner wall 53, a second flat inner wall 54 and a curved inner wall 55 centrally interposed between the first flat inner wall 53 and the second flat inner wall 54. The first flat wall 53, the second flat wall 54 and the curved inner wall 55 in use face the pole 3, and define the internal portion of the first intermediate shell 16 (see Figure 6).

The curved outer wall 52 and the curved inner wall 55 are concentric with each other, with the concavity facing the inside of the first intermediate shell 16, i.e. the respective concavities are both directed towards the longitudinal axis 5 (on which it lies the centre of the external and inner curved walls 52 and 55). Furthermore, the curved inner wall 55 has a lower radius of curvature than that of the curved outer wall 52.

The first intermediate shell 16 is open at its bottom portion 22 and its top portion 24, placing the interior of the first bottom shell 14 in mutual communication with the interior of the first top shell 15, when they are connected respectively to the bottom portion and to the head portion of the first intermediate shell 16.

The first intermediate shell 16 can act as a cover and housing for the at least one electronic component 4 installed in the at least one first compartment 26.

Furthermore, the first intermediate shell 16 can comprise at least one recess 56 (see Figures 1 and 6) provided along the curved side wall 52 and configured to house at least one further electronic component 70 so as to place it outside the box-like body 2, albeit in a sheltered position.

In a preferred embodiment, the further electronic component 70 is a video camera. In other embodiments, instead of a video camera, the further electronic component 70 can be an environmental sensor, for example configured to detect the concentration of carbon dioxide, the humidity of the air rather than other environmental parameters.

The at least one recess 56 extends towards the inside of the first intermediate shell 16 and has a bottom 57, preferably aligned in the longitudinal direction (see Figure 6), which acts as a support wall to which the further electronic component is connected 70.

The bottom 57 delimits at least one passage, not shown in the attached Figures, to allow the passage of at least one cable of a conductor operatively connected to the further electronic component 70.

Except for the passage made along the bottom 57, the at least one recess 56 is separated from the inside of the first intermediate shell 16.

The at least one recess 56 can comprise a deflector element 58 that extends into the recess 56 itself starting from the bottom 57 (see Figure 6).

The deflector element 58 is configured to divert rainwater away from the bottom 57, preventing it from entering the passage made through the bottom 57.

As regards the conformation of the second half-container 7, it can be observed that the same, as mentioned, has the same structure described in relation to the first half-container 6. For better reference, the components of the second half-container 7 will be described below indicating them with the same reference numbers used for the first half-container 6, increased by one hundred units.

As regards the individual shells that make up the second half-container 7, they will be referred to as second shells to facilitate their recognition with respect to the first shells included in the first half-container 6.

The second half-container 7 comprises a second bottom shell 114, a second top shell 115 between which at least a second intermediate shell 116 is optionally interposed.

The electronic apparatus 1 includes third connecting members to mutually connect the second bottom shell 114, the second top shell 115 and the second intermediate shell 16, by clamping them together.

The second bottom shell 114, the second top shell 115 and the second intermediate shell 116 are hollow to allow the housing of at least one electronic component 4 inside the second half-container 7, according to methods similar to those described in relation to the first half container 6.

The third connecting members are configured to perform a connection along a longitudinal direction, i.e. parallel to the longitudinal axis 5 and, if the second half-container 7 comprises at least a second intermediate shell 116 similarly to the first half-container 6, they include tie-rods 118 (schematically illustrated with discontinuous lines in Figure 6) which pass through the second intermediate shell 116. The tie-rods 118 are modular and are configured in a similar way to the tie-rods 18 described for the first half container 6.

The tie-rods 118 have the same conformation as the previously described tie-rods 18, to which reference is made.

In fact, the second bottom shell 114 and the second top shell 115 are clamped to the second intermediate shell 116, from opposite sides.

The second bottom shell 114 has a top portion 121 complementary to a bottom portion 122 of the second intermediate shell 116 and, similarly, the second top shell 115 has a bottom portion 123 complementary to a top portion 124 of the second shell intermediate 116.

The second bottom shell 114 and the second intermediate shell 115, as well as the second top shell 114 and the second intermediate shell 115, are mutually connectable through a shape coupling, promoting the assembly of the second half-container 7.

The electronic apparatus 1 can comprise at least one perimeter gasket 125 at the connecting portions between the second bottom shell 114 and the second intermediate shell 116, as well as between the second top shell 115 and the second intermediate shell 116, to ensure a hermetic seal between them.

The second half-container 7 can comprise at least one compartment inside it for housing at least one electronic component 4.

With reference to what is illustrated in the attached Figure 5, the second half-container 7 can comprise at least a second compartment 126 inside the second bottom shell 114, at the top portion 121.

The at least one second compartment 126 is configured to house at least one electronic component 104 (schematically illustrated in Figure 5 with a discontinuous line).

The at least one second compartment 126 is laterally delimited by external lateral walls 127, the top of which perimetrically delimits the top portion 121 of the second bottom shell 114 and by a bottom wall 128 which extends transversely along the second bottom shell 114, that is to say that the bottom wall 128 develops orthogonal to the longitudinal axis 5.

According to a preferred embodiment, the at least one second compartment 126 has a "C" or substantially "C" shaped plan development, although it is intended that further structures are possible depending on the configuration of the second half-container 7 (and consequently of the first half-container 6).

In particular, the at least one second compartment 126 has a curved outer wall 129, a curved inner wall 130 connected to each other through a first flat inner wall 131 and a second flat inner wall 132.

The curved outer wall 129 and the curved inner wall 130 are each shaped in plan as a semi-circumference and are concentric with each other, with their respective concavities directed towards the inner portion of the second bottom shell 114 (in other words, the centre of said semicircumference of the plan of each of the curved outer and inner walls 129 and 130 lies on the longitudinal axis 5). Furthermore, the curved inner wall 130 has a smaller radius than the outer wall 129.

The first inner wall 131 and the second inner wall 132 are aligned with each other along the diameter shared by the curved outer wall 129 and the curved inner wall 130.

The first inner wall 131 and the second inner wall 132 each have at least one through opening 133 which can be engaged by the first connection members 8 to allow the connection between the second half-container 7 and the first half-container 6.

Furthermore, the first inner wall 131 and the second inner wall 132 act as abutment for respective portions of the first half-container 6 (i.e., respectively, which meet with the second inner part 32 and the first inner wall 31 of the first bottom 14 of the first half-container 6).

It is observed that the first internal wall 131 and/or the second internal wall 132 can comprise at least one further through opening 134 for the passage of any electrical conductors for the operative connection between electronic components 4 present in the first half-container 6 and in the second half-container 7 (see the detail views of Figures 3 and 4).

With reference to the embodiment illustrated in the Figures, the second bottom shell 114 and the second top shell 115 are each shaped like half of a truncated cone.

This conformation, other than promoting the aesthetic integration of the electronic device 1 around the pole 3, facilitates the flow of rainwater avoiding the formation of stagnation or the accumulation of dirt at the top of the electronic apparatus 1.

The second bottom shell 114 and the second top shell 115 are similar in shape, optionally identical, respectively to the first bottom shell 14 and to the first top shell 15.

The second bottom shell 114 therefore has a bottom portion 135, a central portion 136 and, as mentioned, a top portion 121.

The bottom portion 135 can comprise a first semi-circular flange 137 to allow the connection to the first bottom shell 114 of a first abutment element 138 configured to abut against the pole 3 and make the first semi-container 6 adhere firmly thereto.

The first flange 137 delimits a bottom portion of the second semicircular seat 12.

The central portion 136 of the second bottom shell 114 can be configured flared, or converging, from the top portion 121 of the second bottom shell 114 towards the bottom portion 135 of the second bottom shell 114.

As regards, instead, the conformation of the top portion 121 of the second bottom shell 114, reference should be made to what has been previously described.

It is observed that the second bottom shell 114 can comprise a second flange 139 and a third flange 140 which protrude from the top portion 121 for the connection, respectively, of a second abutment element 141 and a third abutment element 142 to the second bottom shell 114. The second abutment element 141 and the third abutment element 142 perform the same purposes described in relation to the first abutment element 138.

In particular, the second flange 139 and the third flange 140 protrude from the curved inner wall 130 of the second bottom shell 114, mutually spaced in the longitudinal direction, that is, along a direction parallel to the longitudinal axis 5.

The second bottom shell 114 comprises first seats 180 for connecting respective tie-rods 118, if provided, to the second bottom shell 114 itself.

The second bottom shell 114 internally, i.e. along the face that in use is facing the pole 3, can be opened, except for the top portion 121 which defines the at least one second compartment 126.

In practice, the second bottom shell 114 has a cavity delimited between the at least one first compartment 126, the side portion 136 and the bottom portion 135.

The second top shell 115 has a configuration similar to that of the second bottom shell 114.

The second top shell 115 therefore has a bottom portion 123, a central portion 143 and a top portion 144.

The top portion 144 of the second top shell 115 may comprise a fourth semi-circular flange 145 to allow the connection to the second top shell 115 of a fourth abutment element 146.

In practice, the fourth flange 145 defines the top of the second semicircular seat 12.

The central portion 143, which externally delimits the second top shell 115, can be configured diverging, from the top portion 144 of the second top shell 115 towards the bottom portion 123 of the second top shell 115.

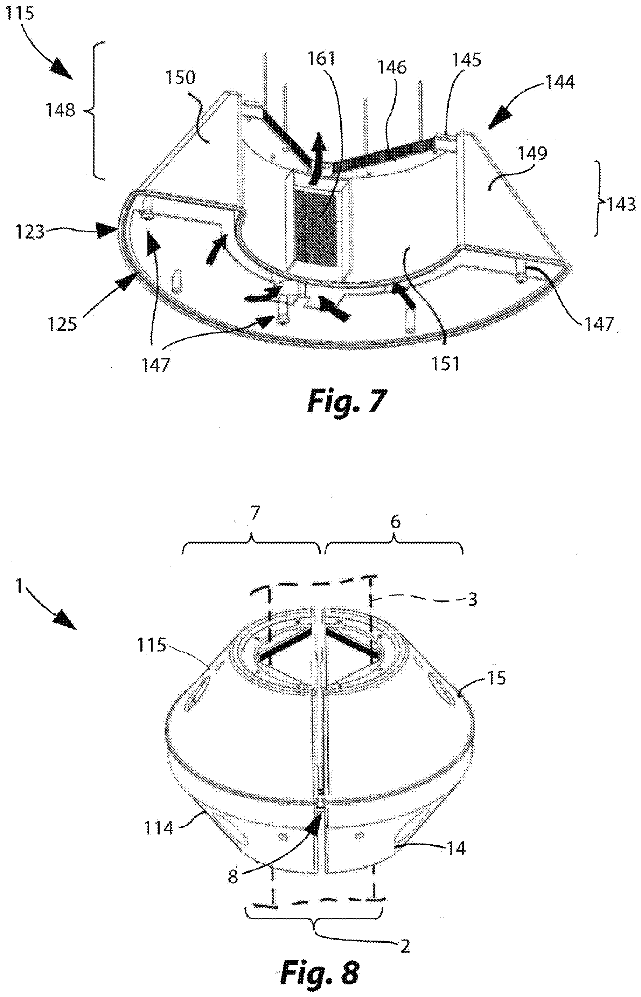

The top portion 144 of the second top shell 115 may have connection seats 147, which protrude from the inside of the second top shell 115 and are configured to be engaged by the third connection members 117. In particular, the connection seats connection 147 can be engaged by threaded elements which protrude from respective head ends 119 of the tie-rods 118, to connect the latter to the second top shell 115 (see Figure 7 wherein the connection seats 147 are engaged by respective screws of the tie-rods 118. These have been specifically omitted).

The second top shell 115 has an internal portion 148, which in use faces the pole 3, delimited by a first flat internal wall 149, a second flat internal wall 150 and a curved internal wall 151 interposed centrally between them.

The first flat inner wall 149 and the second flat inner wall 150 are mutually aligned along a plane parallel to the separation plane 9.

The curved inner wall 151 delimits a portion of the top of the second seat 12 with a semi-circular plan.

In fact, the second top shell 115 defines an upper covering element of the second half-container 7.

The second intermediate shell 116, if present in the second half-container 7, acts as a spacer element between the second bottom shell 114 and the second top shell 115 as well as providing a housing for the positioning of further electronic components 4 for the apparatus electronic 1.

The second intermediate shell 116 is delimited by a curved outer wall 152, by a first flat inner wall 153, by a second flat inner wall 154 and by a curved inner wall 155 centrally arranged between the first flat inner wall 153 and the second inner flat wall 154. The curved side wall 152 and the curved inner wall 155 are concentric with each other with their respective concavities directed to the inner portion of the second intermediate shell 116 (in other words, the centre of the curved outer and inner walls 152 and 155 lies on the longitudinal axis 5).

The second intermediate shell 116 is open at its bottom portion 122 and its top portion 124.

In fact, the second intermediate shell 116 has a plan development equal to or substantially equal to that of the at least one second compartment 126 of the second bottom shell 114.

The second intermediate shell 116 can act as a cover for the at least one electronic component 4 installed in at least a second compartment 126.

The second intermediate shell 116 can comprise at least one recess 156 provided along the curved side wall 152 configured to house at least one further electronic component 170 (see Figure 6).

In particular, the at least one recess 156 is configured to house an additional electronic component 170, for example a video camera, and is configured equivalent to the at least one recess 56 described with reference to the first intermediate shell 16 of the first half-container 6.

The at least one recess 156, therefore, extends towards the inside of the second intermediate shell 116 and has a bottom wall, preferably aligned in the longitudinal direction, which acts as a support to which the further electronic component 170 is connected, according to the same methods described in relation to the first half-container 6 to which reference is made.

The attached Figures 1 and 6 illustrate an electronic apparatus 1 comprising a first intermediate shell 16 and a second intermediate shell 116, each provided with respectively two recesses 56, 156 arranged equidistant from each other according to a circular symmetry around the longitudinal axis 5. In other words, the recesses 56, 156 are mutually spaced along the box-like body 2 by about 90° around the longitudinal axis 5. It is understood that further versions are possible comprising a greater or lesser number of recesses 56 and 156 than those described above, while falling within the same concept of the present invention.

The electronic apparatus 1 comprises an aeration system that develops along the box-like body 2 and configured to effectively cool the at least one electronic component 4, 104 inside the electronic apparatus 1 itself.

More precisely, the aeration system is configured to define a passage for a first air flow F1 inside the first half-container 6 and a passage for a second air flow F2 inside the second half-container 7.

The first air flow F1 strikes the at least one electronic component 4 present inside the first half-container 6 while the second air flow F2 strikes the at least one electronic component 104 present inside the second half-container 7.

More precisely, the first air flow F1 strikes the at least one first electronic component 4 comprised in the first half-container 6 and, similarly, the second air flow F2 strikes the at least one second electronic component 104 comprised in the second half-container 7, removing the heat generated, in use, by them.

Even more in detail, it is pointed out that the first air flow F1 passes through the entire first half-container 6, starting from a bottom portion up to a top portion of the first half-container 6, along a direction aligned or substantially aligned to the direction to the longitudinal axis 5.

Similarly, the second air flow F2 develops passing through the entire second half-container 7, starting from a bottom portion up to a top portion of the second half-container 7 itself, along a direction aligned or substantially aligned to the direction to the longitudinal axis 5.

In this regard, it is noted that the first half-container 6 has at least a first ventilation opening 60 made passing through the at least one first compartment 26, at the bottom wall 28 (see Figure 3).

In fact, the at least one first ventilation opening 60 places the first bottom shell 14 and the first top shell 15 in mutual fluid communication.

It is observed that the at least one first ventilation opening 60 places the interior of the at least one first compartment 26 in fluid communication with the lower cavity delimited in the first bottom shell 14. The lower cavity, in turn, is in communication of fluid with the external environment through the bottom portion 35 of the first bottom shell 14 itself. In this regard, it should be noted that between the first semi-circular seat 11 and the pole 3 there is a port through which air can flow, introducing itself into the cavity delimited in the bottom shell 14 until it reaches the proximity of at least one first ventilation opening 60.

As mentioned, the first intermediate shell 16, if present, is hollow, thus allowing the first flow of air F1, coming from the first bottom shell 14 to rise up to the first top shell 15.

The first top shell 15 has at least a second ventilation opening 61 which places the interior of the first top shell 15 in fluid communication with the external environment to allow the first air flow F1 to escape from the first half-container 6.

It is observed that the at least one second ventilation opening 61 is made passing through the curved inner wall 51 of the first top shell 15 (see Figures 2 and 3).

The at least one second ventilation opening 61 faces along the first semi-circular seat 11, placing the inside of the first top shell 15 in fluid communication with the central seat 10 and, consequently, the inside of the first half container 6 with the external environment.

In fact, the at least one first ventilation opening 60 and the at least one second ventilation opening 61 are in fluid communication with each other and allow the passage of the first air flow F1 to extract the heat produced by the at least one component electronic 4 present inside the first half-container 6.

In particular, the at least one first ventilation opening 60 and the at least one second ventilation opening 61 present along the first half-container 6, are arranged at different heights from each other with respect to the longitudinal axis 5, promoting a spontaneous movement of air along the first half-container 6 itself according to a phenomenon of natural convection.

The circulation of the first flow F1 occurs starting from a slot present along the bottom portion 35 of the first bottom shell 14, through which the air can flow inside the cavity located below the at least one first compartment 26 Then, through the at least one first opening 60 positioned in correspondence with the bottom portion 28 of the at least one first compartment 26, the air is introduced into the at least one first compartment 26, hitting the at least one electronic component 4 therein present, removing the heat produced by the same.

Therefore, the air thus heated, due to the convection phenomenon, rises through the first intermediate shell 16 reaching the inside of the first top shell 15 to then escape through the second ventilation opening 61 outside the first half-container 6.

Similarly, the second half-container 7 has at least a first ventilation opening 160 made passing through the at least one second compartment 126, at the bottom wall 128 (see Figures 4 and 5).

In fact, the at least one first ventilation opening 160 places the second bottom shell 114 and the second top shell 115 in mutual fluid communication.

It is observed that the at least one first ventilation opening 160 places the interior of the at least one second compartment 126 in fluid communication with the lower cavity delimited in the second bottom shell 114. The lower cavity, in turn, is in communication of fluid with the external environment through the bottom portion 135 of the second bottom shell 114 itself. In this regard, it should be noted that between the second semicircular seat 12 and the pole 3 there is a port through which air can flow, introducing itself into the cavity delimited in the second bottom shell 114 until it reaches the proximity of the at least a first ventilation opening 160.

The second intermediate shell 116, if present, is hollow, thus allowing the second air flow F2, coming from the second bottom shell 114 to go up to the second top shell 115.

The second top shell 115 has at least a second ventilation opening 161 which places the interior of the second top shell 115 in fluid communication with the external environment.

It is observed that the at least one second ventilation opening 161 is made passing through the curved inner wall 151 of the second top shell (see Figure 7).

The at least one second ventilation opening 161 faces along the first semi-circular seat 111, placing the interior of the second top shell 115 in fluid communication with the central seat 10 and, consequently, with the external environment.

In fact, the at least one first ventilation opening 160 and the at least one second ventilation opening 161 are in fluid communication with each other and allow the passage of the second air flow F2 to remove the heat produced by the at least one component electronic 104 placed inside the second half-container 7.

In particular, the at least one first ventilation opening 160 and the at least one second ventilation opening 161 present along said second half-container 7, are arranged at different heights with respect to the longitudinal axis 5, promoting a spontaneous movement of air along the second half-container 7 itself according to a natural convection phenomenon.

The circulation of the second flow F2 occurs starting from a slot present along the bottom portion 135 of the second bottom shell 114, through which the air can flow inside the cavity located below the at least one second compartment 126 Therefore, through the at least one first opening 160 positioned at the bottom portion 128 of the at least one second compartment 126, the air enters the at least one second compartment 126, striking the at least one electronic component 104 therein provided, partially removing the heat produced by the same.

Then, the air thus heated rises through the second intermediate shell 116 reaching the inside of the second top shell 115 to then escape through the second ventilation opening 161 outside the second half-container 7.

The at least one first ventilation opening 60 made in the first bottom shell 14 and the at least one first ventilation opening 160 made in the second bottom shell 114 as well as the at least one second ventilation opening 61 made in the first top shell 15 and the at least one second ventilation opening 161 made in the second top shell 115 are positioned along the box-like body 2 so as not to be subjected to the action of rain.

The electronic apparatus 1 comprises anti-condensation grids, schematically illustrated in the attached Figures 2 to 5, 7 and 9 and indicated with references 62 for the first half-container 6.

The anti-condensation grids 62 are applied to the at least one first ventilation opening 60, 160 and the at least one second ventilation opening 61, 161 respectively of the first half-container 6 and the second half-container 7 and are configured to prevent the formation of drops of water caused by the condensation of water vapor inside the box-like body 2. In practice, each anti-condensation grid 62 prevents the accumulation of water since it is conformed so as to break the surface tension that allows the formation of the drops, thus running away the water in course of accumulation, according to methods known in the sector.

The electronic apparatus 1, moreover, can comprise further anti-insect grids, not illustrated in detail in the attached Figures applied to the at least one first ventilation opening 60, 160 and the at least one second ventilation opening 61, 161 respectively of the first half-container 6 and the second half-container 7.

Optionally, the anti-condensation grids 62 can be configured to also act as protection against insects, to prevent them from being introduced into the electronic apparatus 1.

Furthermore, it is observed that in order to repair the at least one second ventilation opening 61, the first top shell 15 comprises a gutter element 63 which extends at least partially at the perimeter of said at least one second ventilation opening 61, to protect the same.

The gutter element 63 is in fact configured to divert rainwater away from at least a second ventilation opening 61 itself.

With reference to the embodiment illustrated in the attached Figure 3, the gutter element 63 develops from a top portion of the at least one second ventilation opening 61 and continues along the lateral sides of the same. In fact, the gutter element 63 can be configured as a frame without a side at the bottom portion of the at least one second ventilation opening 61, so as to promote the flow of rainwater away from the at least one second ventilation opening 61.

Similarly, the second top shell 115 comprises a gutter element 163 which extends at least partially around the at least one second ventilation opening 161, configured in a similar way to that of the gutter element 63 present in the first top shell 15, to fulfil the same purposes.

With reference to the above, it is clear how the aeration system allows an effective disposal of the heat generated inside the first half-container 6 and the second half-container 7 according to a reliable, simple and effective solution.

The absence of forced ventilation organs inside the electronic device 1 guarantees a constant operation of the ventilation system which does not require any maintenance.

The relative positioning of the at least one first ventilation opening 60, 160 and of the at least one second ventilation opening 61, 161 determines a sort of natural draft similar to that of a chimney, ensuring the extraction of heat from inside the body box 2.

From the foregoing it is clear that the electronic apparatus 1 is able to pursue the intended purposes.

The electronic apparatus 1 has a high modularity and flexibility of use, as the individual electronic components 4, 104 are arranged inside the box-like body 2, and therefore protected from the external environment, while being easily accessible in case of maintenance.

In addition, the electronic apparatus 1 is easy to install by providing first connection members 8 configured to connect and mutually clamp the first half-container 6 and the second half-container 7 around a pole 3, in a simple and practical way.

The first connection members 8 are configured to make a bolted connection between the first half-container 6 and the second half-container 7.

In particular, the first connecting members 8 may comprise bolts and relative nuts which can be engaged in respective seats made in the first half-container 6 and in the second half-container 7 to connect them mutually, tightening them together.

It should be noted that the first half-container 6 includes a power supply opening 65 to allow the passage of conductive cables to electrically power the electronic apparatus 1 (see Figures 2, 3 and 6).

The conductor cables used can be those that power the lighting pole 3, as part of solution easy to be installed.

The supply opening 65 can be made passing through a portion of the first bottom shell 14 so as to be in communication with the interior of the at least one first compartment 26, possibly passing through a cable gland device of the known type in the field, so as to be able to operatively connect the power supply conductors to the at least one electronic device and/or electronic circuit installed therein.

In particular, through the power supply opening 65 the power conductors coming out from the pole 3 are passed, so as to bring them inside the at least one first compartment 26, for the purposes indicated above.

The first half-container 6 can comprise a further opening 66, at the supply opening 65, for the passage of at least one network cable coming from the pole 3 (see Figures 2, 3 and 6).

Similarly to what has been described in relation to the supply opening 65, the further opening 66 is in communication with the interior of the at least one first compartment 26 to allow the connection of the at least one network cable with the at least one electronic device or with the electronic card present inside the at least one first compartment 26 itself.

It is noted that the electronic apparatus 1 could have a box-like body 2 without the first intermediate shell 16 and the second intermediate shell 116 (see Figures 8 and 9) while achieving the same purposes described above; in this case, other embodiments of the electronic apparatus according to the invention could in any case be provided with further electronic components 70, 170 outside the box-like body 2 thus configured, wherein the first and second bottom shells 14 and 114 can comprise at least one recess along the respective central portion 36 and 136 configured to house a respective electronic component 70, 170 so as to place it outside the box-like body 2, although in a sheltered position.

The electronic apparatus 1 according to the invention has a high flexibility of use including a plurality of mutually connectable shells so as to facilitate the installation of the electronic apparatus 1 itself as well as its maintenance.

Furthermore, the presence of an aeration system guarantees an effective extraction of the heat produced inside the electronic apparatus 1 during its operation, guaranteeing correct operation of the same and avoiding potentially harmful overheating for the electronic components 4, 104 installed in the electronic apparatus 1 itself.

In the foregoing, the preferred embodiments have been described and variants of the present invention have been suggested, but it is understood that those skilled in the art can make modifications and changes without so departing from the relative scope of protection, as defined by the attached claims.

## Claims

1. Electronic apparatus (1) configured to be connected around a pole (3), wherein said electronic apparatus (1) comprises a box-shaped body (2) which extends axially along a longitudinal axis (5) and at least one electronic component (4, 104) contained in said box-shaped body (2), wherein said box-shaped body (2) comprises a first half-container (6) and a second half-container (7) which can be mutually connected, in a removable way, by first connecting members (8), said first half-container (6) and said second half-container (7) delimiting between them a central cylindrical seat (10) which extends passing through said box-shaped body (2) along said longitudinal axis (5) and is configured to house a section of said pole (3), said first half-container (6) and second half-container (7) are separated reciprocally with respect to a separation plane (9) which extends in said longitudinal axis (5), said electronic apparatus (1) comprises an aeration system configured to define a passage for a first air flow (F1) inside said first half-container (6) from a bottom and a passage for a second air flow (F2) inside said second half-container (7), wherein said first air flow (F1) runs over said at least one electronic component (4) housed in said first half-container (6) and said second air flow (F2) runs over said at least one electronic component (104) housed in said second half-container (7), wherein said first air flow (F1) develops passing through the entire said first half-container (6), starting from a bottom portion to a top portion of said first half-container (6) along a direction aligned or substantially aligned to said longitudinal axis (5) and wherein said second air flow (F2) develops passing through the entire said second half-container (7), starting from a bottom portion to a top portion of said second half-container (7) along a direction aligned or substantially aligned to said longitudinal axis (5).

2. Electronic apparatus (1) according to claim 1, wherein said first half-container (6) comprises a first bottom shell (14) and a first top shell (15) and said second half-container (7) comprises a second bottom shell (114) and a second top shell (115), wherein said aeration system comprises:
- at least one first ventilation opening (60) provided in said first bottom shell (14), through which the first bottom shell (14) and the first top shell (15) are in reciprocal fluid communication,
- a second ventilation opening (61) provided in said first top shell (15), through which said first top shell (15) is in fluid communication with the environment outside said box-shaped body (2),
- at least one first ventilation opening (160) made in said second bottom shell (114), through which said second bottom shell (114) and said second top shell (115) are in mutual fluid communication, and
- a second ventilation opening (161) made in said second top shell (115), through which said second top shell (115) is in fluid communication with the environment external to said body box-shaped (2).

3. Electronic apparatus (1) according to claim 2, wherein said at least one first ventilation opening (60, 160), made in said first bottom shell (14) and in said second bottom shell (114), and said second opening of aeration (61, 161), made in said first top shell (15) and in said second top shell (115), are positioned spaced apart along said longitudinal axis (5), whereby they are configured to promote motion spontaneous air according to a natural convection phenomenon along said first half-container (6) and along said second half-container (7).

4. Electronic apparatus (1) according to claim 2 or 3, wherein said first half-container (6) and said second half-container (7) mutually connected by means of said first connecting members (8) delimit between them at least one bottom slot in fluid communication with said at least one first ventilation opening (60) provided in said first bottom shell (14) and with said at least one first ventilation opening (160) provided in said second bottom shell (114).

5. Electronic apparatus (1) according to any one of claims 2 to 4, wherein said first bottom shell (14) comprises at least a first compartment (26) for housing said at least one electronic component (4), wherein said at least one first compartment (26) is delimited between side walls (27) and a bottom wall (28), said bottom wall (28) comprising said at least one first ventilation opening (60).

6. Electronic apparatus (1) according to any one of claims 2 to 5, wherein said second bottom shell (114) comprises at least a second compartment (126) for housing said at least one electronic component (104), wherein said at least one second compartment (126) is delimited between side walls (127) and a bottom wall (128), said bottom wall (128) comprising said at least one first ventilation opening (160).

7. Electronic apparatus (1) according to any one of claims 2 to 6, wherein said first top shell (15) comprises an inner portion (48), facing said pole (3), delimited by a first inner wall (49), a second inner wall (50) and an inner curved wall (51) interposed centrally between said first flat inner wall (49) and said second inner wall (50), wherein said at least one second ventilation opening (61) is provided along said inner curved wall (51).

8. Electronic apparatus (1) according to any one of claims 2 to 7, wherein said second top shell (115) comprises an inner portion (148), facing said pole (3), delimited by a first inner wall (149), a second inner wall (150) and an inner curved wall (151) interposed centrally between said first flat inner wall (149) and said second inner wall (150), wherein said at least one second ventilation opening (161) is provided along said curved inner wall (151).

9. Electronic apparatus (1) according to any one of claims from 2 to 8, wherein said first bottom shell (14) and said first top shell (15) are removably connected to each other, by second connecting members and wherein said second bottom shell (114) and said second top shell (115) are removably connected to each other by third connection members.

10. Electronic apparatus (1) according to any one of claims 2 to 9, wherein said first half-container (6) comprises a first intermediate shell (16) interposed, with a shape coupling, between said first bottom shell (14) and said first top shell (15) and wherein said second half-container (7) comprises a second intermediate shell (116) interposed, with shape coupling, between said second bottom shell (114) and said second top shell (115).

11. Electronic apparatus (1) according to claim 10, wherein said first intermediate shell (16) is hollow and places in fluid communication said first bottom shell (14) with said first top shell (15) and wherein said second intermediate shell (116) is hollow and places said second bottom shell (114) and said second top shell (115) in fluid communication.

12. Electronic apparatus (1) according to claim 10 or 11, wherein said second connecting members comprise tie-rods (18) passing through said first intermediate shell (16) to mutually connect said first bottom shell (14) and said first shell top (15) clamping them against said first intermediate shell (16), from opposite sides, and said third connecting members comprise tied-rods (118) passing through said second intermediate shell (116) to mutually connect said second bottom shell (114) and said second top shell (115) clamping them against said second intermediate shell (116), from opposite sides.

13. Electronic apparatus (1) according to any one of claims 2 to 12, comprising at least one anti-condensation grid (62) at said at least one first ventilation opening (60, 160) provided in said first bottom shell (14) and in said second bottom shell (114) and/or of said second ventilation opening (61, 161) provided in said first top shell (15) and in said second top shell (115).

14. Electronic apparatus (1) according to any one of claims 2 to 13, wherein said first top shell (15) comprises a gutter element (63) which develops at least partially at the perimeter of said at least one second ventilation opening (61) and/or wherein said second top shell (115) comprises a further gutter element (163) which develops at least partially at the perimeter of said at least one second ventilation opening (161).

15. Electronic apparatus (1) according to claim 14, wherein said gutter element (63) develops starting from a top portion of said at least a second ventilation opening (61) and continues along the side edges of said at least a second ventilation opening (61) or wherein said further gutter element (163) develops starting from a top portion of said at least a second ventilation opening (161) and continues along the side edges of said at least a second ventilation opening (161).

## Patentansprüche

1. Elektronisches Gerät (1), das so konfiguriert ist, dass es um einen Pfosten (3) herum angebracht werden kann, wobei das elektronische Gerät (1) einen kastenförmigen Körper (2) umfasst, der sich axial entlang einer Längsachse (5) erstreckt, und mindestens eine elektronische Komponente (4, 104), die in dem kastenförmigen Körper (2) enthalten ist, wobei der kastenförmige Körper (2) eine erste Behälterhälfte (6) und eine zweite Behälterhälfte-Behälter (7) umfasst, die durch erste Verbindungselemente (8) lösbar miteinander verbunden werden können, wobei der erste Halbbehälter (6) und der zweite Halbbehälter (7) zwischen sich einen zentralen zylindrischen Sitz (10) begrenzen, der sich durch den kastenförmigen Körper (2) entlang der Längsachse (5) erstreckt und so konfiguriert ist, dass er einen Abschnitt des Pfostens (3) aufnehmen kann, wobei der erste Halbbehälter (6)-Behälter (6) und der zweite Halbbehälter (7) in Bezug auf eine Trennebene (9), die sich in der Längsachse (5) erstreckt, voneinander getrennt sind, wobei die elektronische Vorrichtung (1) ein Belüftungssystem umfasst, das so konfiguriert ist, dass es einen Durchgang für einen ersten Luftstrom (F1) innerhalb des ersten Halbbehälters (6) von einem Boden aus und einen Durchgang für einen zweiten Luftstrom (F2) innerhalb des zweiten Halbbehälters (7) zu definieren, wobei der erste Luftstrom (F1) über die mindestens eine in dem ersten Halbbehälter (6) untergebrachte elektronische Komponente (4) strömt und der zweite Luftstrom (F2) über die mindestens eine in dem zweiten Halbbehälter (7) untergebrachte elektronische Komponente (104) strömt, wobei der erste Luftstrom (F1) sich durch den gesamten ersten Halbbehälter (6) hindurch entwickelt (6) ausgehend von einem unteren Abschnitt zu einem oberen Abschnitt des ersten Halbbehälters (6) entlang einer Richtung, die mit der Längsachse (5) ausgerichtet oder im Wesentlichen ausgerichtet ist, und wobei sich der zweite Luftstrom (F2) durch den gesamten zweiten Halbbehälter (7) ausgehend von einem unteren Abschnitt zu einem oberen Abschnitt des zweiten Halbbehälters (7) entlang einer Richtung, die mit der Längsachse (5) ausgerichtet oder im Wesentlichen ausgerichtet ist, entwickelt.

2. Elektronisches Gerät (1) nach Anspruch 1, wobei der erste Halbbehälter (6) eine erste Bodenschale (14) und eine erste Oberschale (15) umfasst und der zweite Halbbehälter (7) eine zweite Bodenschale (114) und eine zweite Oberschale (115) umfasst, wobei das Belüftungssystem umfasst:
- mindestens eine erste Belüftungsöffnung (60), die in der ersten Bodenschale (14) vorgesehen ist und durch die die erste Bodenschale (14) und die erste Oberschale (15) in gegenseitiger Fluidverbindung stehen,
- eine zweite Belüftungsöffnung (61), die in der ersten Oberschale (15) vorgesehen ist, durch die die erste Oberschale (15) in Fluidverbindung mit der Umgebung außerhalb des kastenförmigen Körpers (2) steht,
- mindestens eine erste Belüftungsöffnung (160), die in der zweiten Bodenhülle (114) ausgebildet ist, durch die die zweite Bodenhülle (114) und die zweite Oberseite (115) in gegenseitiger Fluidverbindung stehen, und
- eine zweite Belüftungsöffnung (161), die in der zweiten Oberschale (115) ausgebildet ist, durch die die zweite Oberschale (115) in Fluidverbindung mit der Umgebung außerhalb des kastenförmigen Körpers (2) steht.

3. Elektronisches Gerät (1) nach Anspruch 2, wobei die mindestens eine erste Belüftungsöffnung (60, 160), die in der ersten Bodenschale (14) und in der zweiten Bodenschale (114) ausgebildet ist, und die zweite Belüftungsöffnung (61, 161), die in der ersten Oberschale (15) und in der zweiten Oberschale (115) ausgebildet ist, entlang der Längsachse (5) beabstandet angeordnet sind, wodurch sie so konfiguriert sind, dass sie eine spontane Luftbewegung gemäß einem natürlichen Konvektionsphänomen entlang des ersten Halbbehälters (6) und entlang des zweiten Halbbehälters (7) fördern.

4. Elektronisches Gerät (1) nach Anspruch 2 oder 3, wobei der erste Halbbehälter (6) und der zweite Halbbehälter (7), die mittels der ersten Verbindungselemente (8) miteinander verbunden sind, zwischen sich mindestens einen Bodenschlitz begrenzen, der in Fluidverbindung mit der mindestens einen ersten Belüftungsöffnung (60), die in der ersten Bodenschale (14) vorgesehen ist, und mit der mindestens einen ersten Belüftungsöffnung (160) in der zweiten Bodenschale (114) in Fluidverbindung steht.

5. Elektronisches Gerät (1) nach einem der Ansprüche 2 bis 4, wobei die erste Bodenschale (14) mindestens ein erstes Fach (26) zur Aufnahme der mindestens einen elektronischen Komponente (4) umfasst, wobei das mindestens eine erste Fach (26) zwischen Seitenwänden (27) und einer Bodenwand (28) begrenzt ist, wobei die Bodenwand (28) die mindestens eine erste Belüftungsöffnung (60) aufweist.

6. Elektronisches Gerät (1) nach einem der Ansprüche 2 bis 5, wobei die zweite Bodenhülle (114) mindestens ein zweites Fach (126) zur Aufnahme der mindestens einen elektronischen Komponente (104) umfasst, wobei das mindestens eine zweite Fach (126) zwischen Seitenwänden (127) und einer Bodenwand (128) begrenzt ist, wobei die Bodenwand (128) die mindestens eine erste Belüftungsöffnung (160) umfasst.

7. Elektronisches Gerät (1) nach einem der Ansprüche 2 bis 6, wobei die erste Oberschale (15) einen inneren Abschnitt (48) umfasst, der dem Pol (3) zugewandt ist der durch eine erste Innenwand (49), eine zweite Innenwand (50) und eine mittig zwischen der ersten flachen Innenwand (49) und der zweiten Innenwand (50) angeordnete innere gekrümmte Wand (51) begrenzt ist, wobei die mindestens eine zweite Belüftungsöffnung (61) entlang der inneren gekrümmten Wand (51) vorgesehen ist.

8. Elektronisches Gerät (1) nach einem der Ansprüche 2 bis 7, wobei die zweite Oberschale (115) einen inneren Abschnitt (148) umfasst, der dem Pol (3) zugewandt ist der durch eine erste Innenwand (149), eine zweite Innenwand (150) und eine mittig zwischen der ersten flachen Innenwand (149) und der zweiten Innenwand (150) angeordnete innere gekrümmte Wand (151) begrenzt ist, wobei die mindestens eine zweite Belüftungsöffnung (161) entlang der gekrümmten Innenwand (151) vorgesehen ist.

9. Elektronisches Gerät (1) nach einem der Ansprüche 2 bis 8, wobei die erste Bodenhülle (14) und die erste Oberseitenhülle (15) durch zweite Verbindungselemente lösbar miteinander verbunden sind und wobei die zweite Bodenhülle (114) und die zweite Oberseitenhülle (115) durch dritte Verbindungselemente lösbar miteinander verbunden sind.

10. Elektronisches Gerät (1) nach einem der Ansprüche 2 bis 9, wobei der erste Halbbehälter (6) eine erste Zwischenschale (16) umfasst, die formschlüssig zwischen der ersten Bodenschale (14) und der ersten Oberschale (15) angeordnet ist, und wobei der zweite Halbbehälter (7) eine zweite Zwischenschale (116) aufweist, die formschlüssig zwischen der zweiten Bodenschale (114) und der zweiten Oberschale (115) angeordnet ist.

11. Elektronisches Gerät (1) nach Anspruch 10, wobei die erste Zwischenschale (16) hohl ist und die erste Bodenschale (14) mit der ersten Oberschale (15) in Fluidverbindung bringt und wobei die zweite Zwischenschale (116) hohl ist und die zweite Bodenschale (114) und die zweite Oberschale (115) in Fluidverbindung bringt.

12. Elektronisches Gerät (1) nach Anspruch 10 oder 11, wobei die zweiten Verbindungselemente Zugstangen (18) umfassen, die durch die erste Zwischenschale (16) hindurchgehen, um die erste Bodenschale (14) und die erste Oberschale (15) miteinander zu verbinden, indem sie sie gegen die erste Zwischenschale (16) klemmen, und die dritten Verbindungselemente Zugstangen (118) umfassen, die durch die zweite Zwischenschale (116) hindurchgehen, um die zweite Bodenschale (114) und die zweite Oberschale (115) miteinander zu verbinden und sie von gegenüberliegenden Seiten gegen die zweite Zwischenschale (116) zu klemmen.

13. Elektronisches Gerät (1) nach einem der Ansprüche 2 bis 12, mit mindestens einem Antikondensationsgitter (62) an der mindestens einen ersten Belüftungsöffnung (60, 160), die in der ersten Bodenhülle (14) und in der zweiten Bodenhülle (114) vorgesehen ist, und/oder an der zweiten Belüftungsöffnung (61, 161) vorgesehenen zweiten Belüftungsöffnung (61, 161) in der ersten Oberschale (15) und in der zweiten Oberschale (115).

14. Elektronisches Gerät (1) nach einem der Ansprüche 2 bis 13, wobei die erste Oberschale (15) ein Rinnenelement (63) umfasst, das sich zumindest teilweise am Umfang der mindestens einen zweiten Belüftungsöffnung (61) erstreckt, und/oder wobei die zweite Oberschale (115) ein weiteres Rinnenelement (163) aufweist, das sich zumindest teilweise am Umfang der mindestens einen zweiten Belüftungsöffnung (161) erstreckt.

15. Elektronisches Gerät (1) nach Anspruch 14, wobei das Rinnenelement (63) sich von einem oberen Abschnitt der mindestens einen zweiten Belüftungsöffnung (61) aus erstreckt und entlang den Seitenkanten der mindestens einen zweiten Belüftungsöffnung (61) verläuft oder wobei das weitere Rinnenelement (163) sich von einem oberen Abschnitt der mindestens einen zweiten Belüftungsöffnung (161) aus erstreckt und entlang den Seitenkanten der mindestens einen zweiten Belüftungsöffnung (161) verläuft. (161) ausgehend von einem oberen Abschnitt der mindestens einen zweiten Belüftungsöffnung (161) entwickelt und entlang den Seitenkanten der mindestens einen zweiten Belüftungsöffnung (161) verläuft.

## Revendications

1. Appareil électronique (1) configuré pour être relié autour d'un poteau (3), dans lequel ledit appareil électronique (1) comprend un corps en forme de boîte (2) qui s'étend axialement le long d'un axe longitudinal (5) et au moins un composant électronique (4, 104) contenu dans ledit corps en forme de boîte (2), où ledit corps en forme de boîte (2) comprend un premier demi-récipient (6) et un second demi-récipient (7) qui peuvent être reliés mutuellement, de manière amovible, par des premiers organes de liaison (8), ledit premier demi-récipient (6) et ledit second demi-récipient (7) délimitant entre eux un siège cylindrique central (10) qui s'étend en passant à travers ledit corps en forme de boîte (2) le long dudit axe longitudinal (5) et est configuré pour loger une section dudit poteau (3), lesdits premier demi-récipient (6) et second demi-récipient (7) sont séparés réciproquement par rapport à un plan de séparation (9) qui s'étend dans ledit l'axe longitudinal (5), ledit appareil électronique (1) comprend un système d'aération configuré pour définir un passage pour un premier flux d'air (F1) à l'intérieur dudit premier demi-récipient (6) depuis un fond et un passage pour un second flux d'air (F2) à l'intérieur dudit second demi-récipient (7), où ledit premier flux d'air (F1) s'écoule sur ledit au moins un composant électronique (4) logé dans ledit premier demi-récipient (6) et ledit second flux d'air (F2) s'écoule sur ledit au moins un composant électronique (104) logé dans ledit second demi-récipient (7), où ledit premier flux d'air (F1) se développe en passant à travers l'ensemble dudit premier demi-récipient (6), à partir d'une partie inférieure jusqu'à une partie supérieure dudit premier demi-récipient (6) le long d'une direction alignée ou sensiblement alignée sur ledit axe longitudinal (5) et où ledit second flux d'air (F2) se développe en passant à travers l'ensemble dudit second demi-récipient (7), à partir d'une partie inférieure jusqu'à une partie supérieure dudit second demi-récipient (7) le long d'une direction alignée ou sensiblement alignée sur ledit axe longitudinal (5).

2. Appareil électronique (1) selon la revendication 1, dans lequel ledit premier demi-récipient (6) comprend une première coque inférieure (14) et une première coque supérieure (15) et ledit second demi-récipient (7) comprend une seconde coque inférieure (114) et une seconde coque supérieure (115), où ledit système d'aération comprend :
- au moins une première ouverture de ventilation (60) prévue dans ladite première coque inférieure (14), à travers laquelle la première coque inférieure (14) et la première coque supérieure (15) sont en communication fluidique réciproque,
- une seconde ouverture de ventilation (61) prévue dans ladite première coque supérieure (15), à travers laquelle ladite première coque supérieure (15) est en communication fluidique avec l'environnement à l'extérieur dudit corps en forme de boîte (2),
- au moins une première ouverture de ventilation (160) réalisée dans ladite seconde coque inférieure (114), à travers laquelle ladite seconde coque inférieure (114) et ladite seconde coque supérieure (115) sont en communication fluidique mutuelle, et
- une seconde ouverture de ventilation (161) réalisée dans ladite seconde coque supérieure (115), à travers laquelle ladite seconde coque supérieure (115) est en communication fluidique avec l'environnement externe audit corps en forme de boîte (2).

3. Appareil électronique (1) selon la revendication 2, dans lequel ladite au moins une première ouverture de ventilation (60, 160), réalisée dans ladite première coque inférieure (14) et dans ladite seconde coque inférieure (114), et ladite seconde ouverture d'aération (61, 161), réalisée dans ladite première coque supérieure (15) et dans ladite seconde coque supérieure (115), sont positionnées de manière espacée le long dudit axe longitudinal (5), moyennant quoi elles sont configurées pour favoriser le mouvement spontané de l'air selon un phénomène de convection naturelle le long dudit premier demi-récipient (6) et le long dudit second demi-récipient (7).

4. Appareil électronique (1) selon la revendication 2 ou 3, dans lequel ledit premier demi-récipient (6) et ledit second demi-récipient (7) reliés mutuellement au moyen desdits premiers organes de liaison (8), délimitent entre eux au moins une fente inférieure en communication fluidique avec ladite au moins une première ouverture de ventilation (60) prévue dans ladite première coque inférieure (14) et avec ladite au moins une première ouverture de ventilation (160) prévue dans ladite seconde coque inférieure (114).

5. Appareil électronique (1) selon l'une quelconque des revendications 2 à 4, dans lequel ladite première coque inférieure (14) comprend au moins un premier compartiment (26) pour loger ledit au moins un composant électronique (4), où ledit au moins un premier compartiment (26) est délimité entre des parois latérales (27) et une paroi inférieure (28), ladite paroi inférieure (28) comprenant ladite au moins une première ouverture de ventilation (60).

6. Appareil électronique (1) selon l'une quelconque des revendications 2 à 5, dans lequel ladite seconde coque inférieure (114) comprend au moins un second compartiment (126) pour loger ledit au moins un composant électronique (104), où ledit au moins un second compartiment (126) est délimité entre des parois latérales (127) et une paroi inférieure (128), ladite paroi inférieure (128) comprenant ladite au moins une première ouverture de ventilation (160).

7. Appareil électronique (1) selon l'une quelconque des revendications 2 à 6, dans lequel ladite première coque supérieure (15) comprend une partie interne (48), faisant face audit poteau (3), délimitée par une première paroi interne (49), une seconde paroi interne (50) et une paroi interne incurvée (51) interposée au centre entre ladite première paroi interne plate (49) et ladite seconde paroi interne (50), où ladite au moins une seconde ouverture de ventilation (61) est prévue le long de ladite paroi interne incurvée (51).

8. Appareil électronique (1) selon l'une quelconque des revendications 2 à 7, dans lequel ladite seconde coque supérieure (115) comprend une partie interne (148), faisant face audit poteau (3), délimitée par une première paroi interne (149), une seconde paroi interne (150) et une paroi interne incurvée (151) interposée au centre entre ladite première paroi interne plate (149) et ladite seconde paroi interne (150), où ladite au moins une seconde ouverture de ventilation (161) est prévue le long de ladite paroi interne incurvée (151).

9. Appareil électronique (1) selon l'une quelconque des revendications 2 à 8, dans lequel ladite première coque inférieure (14) et ladite première coque supérieure (15) sont reliées de manière amovible l'une à l'autre, par des deuxièmes organes de liaison et dans lequel ladite seconde coque inférieure (114) et ladite seconde coque supérieure (115) sont reliées de manière amovible l'une à l'autre par des troisièmes organes de liaison.

10. Appareil électronique (1) selon l'une quelconque des revendications 2 à 9, dans lequel ledit premier demi-récipient (6) comprend une première coque intermédiaire (16) interposée, par couplage de forme, entre ladite première coque inférieure (14) et ladite première coque supérieure (15) et dans lequel ledit second demi-récipient (7) comprend une seconde coque intermédiaire (116) interposée, par couplage de forme, entre ladite seconde coque inférieure (114) et ladite seconde coque supérieure (115).

11. Appareil électronique (1) selon la revendication 10, dans lequel ladite première coque intermédiaire (16) est creuse et met en communication fluidique ladite première coque inférieure (14) avec ladite première coque supérieure (15) et dans lequel ladite seconde coque intermédiaire (116) est creuse et met ladite seconde coque inférieure (114) et ladite seconde coque supérieure (115) en communication fluidique.

12. Appareil électronique (1) selon la revendication 10 ou 11, dans lequel lesdits deuxièmes organes de liaison comprennent des tirants (18) passant à travers ladite première coque intermédiaire (16) pour relier mutuellement ladite première coque inférieure (14) et ladite première coque supérieure (15) en les serrant contre ladite première coque intermédiaire (16), depuis des côtés opposés, et lesdits troisièmes organes de liaison comprennent des tirants (118) passant à travers ladite seconde coque intermédiaire (116) pour relier mutuellement ladite seconde coque inférieure (114) et ladite seconde coque supérieure (115) en les serrant contre ladite seconde coque intermédiaire (116), depuis des côtés opposés.

13. Appareil électronique (1) selon l'une quelconque des revendications 2 à 12, comprenant au moins une grille anti-condensation (62) au niveau de ladite au moins une première ouverture de ventilation (60, 160) prévue dans ladite première coque inférieure (14) et dans ladite seconde coque inférieure (114) et/ou de ladite seconde ouverture de ventilation (61, 161) prévue dans ladite première coque supérieure (15) et dans ladite seconde coque supérieure (115).

14. Appareil électronique (1) selon l'une quelconque des revendications 2 à 13, dans lequel ladite première coque supérieure (15) comprend un élément de gouttière (63) qui se développe au moins partiellement au niveau du périmètre de ladite au moins une seconde ouverture de ventilation (61) et/ou dans lequel ladite seconde coque supérieure (115) comprend un élément de gouttière supplémentaire (163) qui se développe au moins partiellement au niveau du périmètre de ladite au moins une seconde ouverture de ventilation (161).

15. Appareil électronique (1) selon la revendication 14, dans lequel ledit élément de gouttière (63) se développe à partir d'une partie supérieure de ladite au moins une seconde ouverture de ventilation (61) et continue le long des bords latéraux de ladite au moins une seconde ouverture de ventilation (61) ou dans lequel ledit élément de gouttière (163) supplémentaire se développe à partir d'une partie supérieure de ladite au moins une seconde ouverture de ventilation (161) et continue le long des bords latéraux de ladite au moins une seconde ouverture de ventilation (161).
